# EUROPEAN PATENT SPECIFICATION

(11) **EP 4 029 751 B1**
(45) Date of publication and mention of the grant of the patent: **18.12.2024**
(21) Application number: 22151128.0
(22) Date of filing: 12.01.2022
(51) Int. Cl.: B60W 50/00

(54) **VEHICLE CONTROL SYSTEM, VEHICLE CONTROL METHOD, AND STORAGE MEDIUM**
FAHRZEUGSTEUERUNGSSYSTEM, FAHRZEUGSTEUERUNGSVERFAHREN UND SPEICHERMEDIUM
SYSTÈME DE COMMANDE DE VÉHICULE, PROCÉDÉ DE COMMANDE DE VÉHICULE ET SUPPORT DE STOCKAGE

(30) Priority: 12.01.2021 CN 202110035337
(43) Date of publication of application: 20.07.2022
(73) Proprietor: Nio Technology (Anhui) Co., Ltd, Hefei City, Anhui 230601 (CN)
(72) Inventor: XIAO, Bohong, Anhui, 230601 (CN); TEOBALDI, Danilo, Anhui, 230601 (CN); YUAN, Da, Anhui, 230601 (CN); WANG, Baotian, Anhui, 230601 (CN)
(74) Representative: Vossius & Partner Patentanwälte Rechtsanwälte mbB

(56) References cited:
- DE-A1- 102014 203 752
- DE-A1- 102017 006 338
- US-A1- 2005 027 402
- US-A1- 2020 391 756
- US-B2- 7 162 333

## Description

### Technical Field

This invention relates to the field of vehicle control, and in particular to a vehicle control system, a vehicle control method, and a storage medium.

### Background Art

High-level intelligent driving has imposed increasingly high requirements on vehicle motion control. However, most of the current vehicle control methods perform transverse and longitudinal control separately, and rarely take impact in the normal direction into consideration. Furthermore, most of the current software architectures are flow-oriented. When a new function is added externally, it is required to add a function to the corresponding motion control, and consider the cooperation between the function and other functions, resulting in a heavy workload. In addition, unexpected problems may often occur to the coordination between functions.

US 2005/027402 A1 relates to an integrated vehicle motion control system. The integrated vehicle motion control system is provided in which the software configuration is formed in a hierarchical structure, and includes (a) a command section adapted to determine target vehicle state quantities based on driving related information, and (b) an executing section adapted to receive the target vehicle state quantities as commands from the command section, and execute the commands by means of a plurality of actuators. The command section includes an upper-level command section adapted to determine first target vehicle state quantities based on the driving related information, without taking account of the dynamic behavior of the vehicle, and a lower-level command section adapted to determine second target vehicle state quantities in view of the dynamic behavior of the vehicle.

### Summary of the Invention

The subject-matter of the present invention is defined by the features of the independent claims. Further preferred embodiments of the present invention are defined in the dependent claims. In particular, embodiments of this invention provide a vehicle control system, a vehicle control method, and a storage medium, which are used for providing a comprehensive service combination by means of shielding underlying hardware, so as to implement more rational vehicle control.

According to a first aspect of this invention, a vehicle control system is provided. The system includes: a planning layer in which a service is configured to generate a coarse and primitive operation instruction according to a driving task; a reference layer in which a service is configured to generate a target parameter according to the operation instruction, the target parameter reflecting a requirement for state control of a vehicle; an advanced control layer in which a service is configured to generate an execution parameter according to the target parameter, the execution parameter reflecting an execution capability of a vehicle executor for the requirement for state control; an allocation control layer in which a service is configured to allocate category task parameters to category executors according to the execution parameter; and an underlying control layer in which a service is configured to provide the category task parameter for at least one of the category executors.

In some embodiments of this invention, optionally, the reference layer includes at least one of the following: a longitudinal trajectory tracking service configured to provide a target longitudinal trajectory parameter of the vehicle; a transverse trajectory tracking service configured to provide a target transverse trajectory parameter of the vehicle; a six-degree-of-freedom mode service configured to provide target parameters for mode setting of the vehicle, including accelerations in three directions and angular velocities in the three directions; and a gear control service configured to provide a target parameter for gear setting of the vehicle.

In some embodiments of this invention, optionally, the advanced control layer includes at least one of the following: a driver required torque service configured to determine a manual operation required torque; a vehicle longitudinal acceleration control service configured to determine an acceleration required torque or an execution parameter requested for parking; a yaw motion control service configured to determine a yaw motion required torque; a slip rate control service configured to determine a slip rate required torque; a normal control service configured to determine a normal torque; a pitch control service configured to determine a pitch torque; and a roll control service configured to determine a roll control torque.

In some embodiments of this invention, optionally, the allocation control layer includes at least one of the following: a driving and braking coordination control service configured to allocate a torque control category task parameter to a driving category executor and a braking category task parameter to a braking category executor; a low-speed parking service configured to allocate a parking braking category task parameter to a parking braking category executor and a gear control category task parameter to a gear control category executor; a yaw motion control coordination service configured to allocate a braking category task parameter to a braking category executor, a steering category task parameter to a steering assistance category executor, and a suspension adjustment category task parameter to a suspension control category executor; a driving and braking slip rate control coordination service configured to allocate a torque control category task parameter to a motor torque category executor and a braking category task parameter to a braking slip rate control category executor; and a six-degree-of-freedom coordination control service configured to allocate a torque control category task parameter to a driving category executor, a braking category task parameter to a braking category executor, a steering category task parameter to a steering assistance category executor, a vehicle body height adjustment category task parameter to a vehicle body height adjustment category executor, and a normal force control category task parameter to a suspension control category executor.

In some embodiments of this invention, optionally, the underlying control layer includes at least one of the following: a driver required torque allocation service configured to provide an actual torque control task parameter for at least one of driving category executors; a motor torque slip rate control service configured to provide an actual torque control task parameter for at least one of driving category executors; a braking force allocation service configured to provide an actual braking task parameter for at least one of braking category executors; a braking response slip rate control service configured to provide an actual braking task parameter for at least one of braking category executors; an electronic steering assistance service configured to provide an actual steering task parameter for at least one of steering assistance category executors; an air spring control service configured to provide an actual vehicle body height adjustment task parameter for at least one of vehicle body height adjustment category executors; and a suspension control service configured to provide an actual normal force control task parameter for at least one of suspension control category executors.

According to another aspect of this invention, a vehicle control method is provided. The method includes: generating a coarse and primitive operation instruction according to a driving task; generating a target parameter according to the operation instruction, the target parameter reflecting a requirement for state control of a vehicle; generating an execution parameter according to the target parameter, the execution parameter reflecting an execution capability of a vehicle executor for the requirement for state control; allocating category task parameters to category executors according to the execution parameter; and providing the category task parameter for at least one of the category executors.

In some embodiments of this invention, optionally, generating a target parameter according to the operation instruction includes at least one of the following: providing a target longitudinal trajectory parameter of the vehicle; providing a target transverse trajectory parameter of the vehicle; providing target parameters for mode setting of the vehicle, including accelerations in three directions and angular velocities in the three directions; and providing a target parameter for gear setting of the vehicle.

In some embodiments of this invention, optionally, generating an execution parameter according to the target parameter includes at least one of the following: determining a manual operation required torque; determining an acceleration required torque or an execution parameter requested for parking; determining a yaw motion required torque; determining a slip rate required torque; and determining a normal torque, a pitch torque, and a roll control torque.

In some embodiments of this invention, optionally, allocating category task parameters to category executors according to the execution parameter includes at least one of the following: allocating a torque control category task parameter to a driving category executor; allocating a braking category task parameter to a braking category executor; allocating a parking braking category task parameter to a parking braking category executor; allocating a gear control category task parameter to a gear control category executor; allocating a steering category task parameter to a steering assistance category executor; allocating a suspension adjustment category task parameter to a suspension control category executor; allocating a torque control category task parameter to a motor torque category executor; allocating a braking category task parameter to a braking slip rate control category executor; allocating a vehicle body height adjustment category task parameter to a vehicle body height adjustment category executor; and allocating a normal force control category task parameter to a suspension control category executor.

In some embodiments of this invention, optionally, providing the category task parameter for at least one of the category executors includes at least one of the following: providing an actual torque control task parameter for at least one of driving category executors; providing an actual braking task parameter for at least one of braking category executors; providing an actual steering task parameter for at least one of steering assistance category executors; providing an actual vehicle body height adjustment task parameter for at least one of vehicle body height adjustment category executors; and providing an actual normal force control task parameter for at least one of suspension control category executors.

According to still another aspect of this invention, a computer-readable storage medium is provided, which has instructions stored therein, where the instructions, when executed by a processor, cause the processor to perform any one of the methods described above.

According to non-claimed aspect of this application, a vehicle control system is provided. The system includes: an instruction generation unit configured to generate an operation instruction according to a driving task; a target parameter generation unit configured to generate a target parameter according to the operation instruction, the target parameter reflecting a requirement for state control of a vehicle; an execution parameter generation unit configured to generate an execution parameter according to the target parameter, the execution parameter reflecting an execution capability of a vehicle executor for the requirement for state control; a category parameter generation unit configured to allocate category task parameters to category executors according to the execution parameter; and a parameter allocation unit configured to provide the category task parameter for at least one of the category executors.

In some embodiments of this application, optionally, the target parameter generation unit may particularly perform at least one of the following: providing a target longitudinal trajectory parameter of the vehicle; providing a target transverse trajectory parameter of the vehicle; providing target parameters for mode setting of the vehicle, including accelerations in three directions and angular velocities in the three directions; and providing a target parameter for gear setting of the vehicle.

In some embodiments of this application, optionally, the execution parameter generation unit may particularly perform at least one of the following: determining a manual operation required torque; determining an acceleration required torque or an execution parameter requested for parking; determining a yaw motion required torque; determining a slip rate required torque; and determining a normal torque, a pitch torque, and a roll control torque.

In some embodiments of this application, optionally, the category parameter generation unit may particularly perform at least one of the following: allocating a torque control category task parameter to a driving category executor; allocating a braking category task parameter to a braking category executor; allocating a parking braking category task parameter to a parking braking category executor; allocating a gear control category task parameter to a gear control category executor; allocating a steering category task parameter to a steering assistance category executor; allocating a suspension adjustment category task parameter to a suspension control category executor; allocating a torque control category task parameter to a motor torque category executor; allocating a braking category task parameter to a braking slip rate control category executor; allocating a vehicle body height adjustment category task parameter to a vehicle body height adjustment category executor; and allocating a normal force control category task parameter to a suspension control category executor.

In some embodiments of this application, optionally, the parameter allocation unit may particularly perform at least one of the following: providing an actual torque control task parameter for at least one of driving category executors; providing an actual braking task parameter for at least one of braking category executors; providing an actual steering task parameter for at least one of steering assistance category executors; providing an actual vehicle body height adjustment task parameter for at least one of vehicle body height adjustment category executors; and providing an actual normal force control task parameter for at least one of suspension control category executors.

### Brief Description of the Drawings

The above and other objectives and advantages of this invention will be more thorough and clearer from the following detailed description in conjunction with the drawings, where the same or similar elements are represented by the same reference numerals.
FIG. 1 shows a vehicle control system according to an embodiment of this invention,
FIG. 2 shows a vehicle control system according to an embodiment of this invention.
FIG. 3 shows a working principle of a service according to an embodiment of this invention.
FIG. 4 shows a vehicle control method according to an embodiment of this invention.
FIG. 5 shows a vehicle control system according to an embodiment of this invention.

### Detailed Description of Embodiments

For the sake of brevity and illustrative purposes, the principles of this invention are mainly described herein with reference to its exemplary embodiments. However, those skilled in the art would easily realize that the same principles may be equivalently applied to all types of vehicle control systems, vehicle control methods, and storage media, and these same or similar principles may be implemented therein, where any such changes do not depart from the scope defined by the claims.

The invention provides a service-oriented vehicle motion control mechanism, in which various services that may be provided through vehicle motion control are abstracted for output through a unified interface. By using an SOA architecture, which may allow for the planning and integration of service functions on different operating systems and different platforms of different OEMs to implement rapid iteration and reorganization of the functions and meet rapid and changeable business requirements, the services provided in the invention can always meet external requirements no matter how external newly-added functions change.

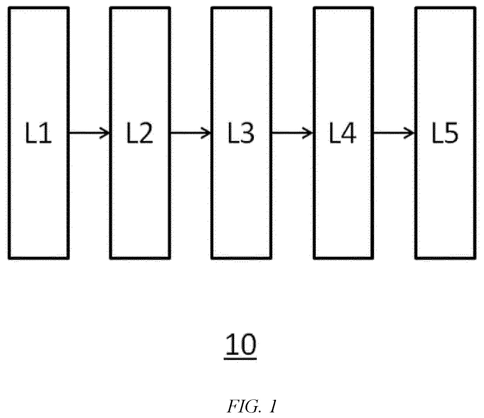

According to an aspect of this application, a vehicle control system is provided. As shown in FIG. 1, a vehicle control system 10 includes a planning layer L1, a reference layer L2, an advanced control layer L3, an allocation control layer L4, and an underlying control layer L5. Each layer is composed of several services. Each service may implement several abstract functions, thus providing various functionalities on the basis of shielding underlying hardware.

The services among the layers may transfer information. According to the design, a service includes several inputs and outputs. An output of a service in an upper layer may be used as an input of a service in a lower layer, and a command is finally issued to specific execution hardware. How the services in each layer transfer information is associated with a driving task. A given driving task connects one or more services in each layer in series (these services connected in series may be fixed as a model corresponding to the driving task for invocation), and a command is finally issued to execution hardware to complete the driving task.

A service in the planning layer L1 of the vehicle control system 10 is configured to generate an operation instruction according to a driving task. The driving task may be a driver manipulating operable hardware as required, for example, turning a steering wheel, stepping on a brake pedal, stepping on an accelerator pedal, etc. The driving task may also be an execution process of an automatic execution mechanism according to an established procedure, for example, automatic parking, automatic vehicle following, etc. The execution process of the above driving task may be reflected by a specific operation instruction according to manipulation of the operable hardware or an automatic execution process. For example, slamming on an accelerator may be a rapid accelerating driving task. In this case, an operation instruction may be accelerating, and an acceleration value may be associated with a throttle openness. For another example, in an automatic parking process, a vehicle speed may be specifically adjusted based on obstacles in front and behind. In this case, an operation instruction may also be accelerating.

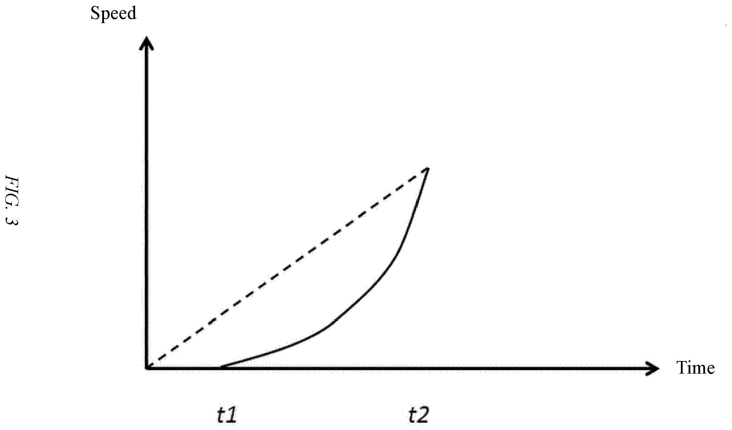

A service in the reference layer L2 of the vehicle control system 10 is configured to generate a target parameter according to the operation instruction, the target parameter reflecting a requirement for state control of a vehicle. The above operation instruction generated in the planning layer L1 is coarse and primitive. Sometimes, the operation instruction reflects only a requirement of a single driving task, but more often driving tasks are performed simultaneously. For example, the steering wheel may also be turned in a process of slamming on the accelerator pedal. The service in the reference layer L2 may comprehensively consider a plurality of driving tasks to give a comprehensive value as the target parameter, for example, integrating received angular velocity operation instructions into a target angular velocity parameter. Furthermore, the service in the reference layer L2 may also optimize an operation instruction value to generate the target parameter. For example, the operation instruction indicates a uniformly accelerated motion with an acceleration of 5 m/s². However, for comfort of a driver and passengers and preventing the driver from stepping on the pedal accidentally, an acceleration reflected by the target parameter may have a certain hysteresis, and an acceleration curve may be smoother at an initial section. FIG. 3 shows an acceleration curve (indicated by a dotted line) reflecting an operation instruction, and an acceleration curve (indicated by a solid line) reflecting a target parameter. Compared with the acceleration curve of the operation instruction, the acceleration curve of the target parameter has a hysteresis, in which acceleration starts at a time t1, and an initial acceleration section is smooth. Finally, at a time t2, a speed required for a driving task is reached in both curves.

A service in the advanced control layer L3 of the vehicle control system 10 is configured to generate an execution parameter according to the target parameter, the execution parameter reflecting an execution capability of a vehicle executor for the requirement for state control. The target parameter determined in the reference layer L2 reflects state requirements for the vehicle, but these requirements need to be met through execution of various resources (executors) of the vehicle. There is thus a need to convert these requirements into execution parameters of the resources of the vehicle. For example, when the target parameter is an acceleration X m/s², a corresponding execution parameter is torque Y N·m. Therefore, the advanced control layer L3 converts the state requirement for the vehicle into the execution capability of the vehicle.

A service in the allocation control layer L4 of the vehicle control system 10 is configured to allocate category task parameters to category executors according to the execution parameter. In the context of this application, a class of resources that may execute the same task is classified as executors of a category. For example, when a vehicle is provided with four hub motors, the four hub motors may execute a deceleration task. In addition, four-wheel braking systems may also execute the deceleration task. The four hub motors and the four braking systems may be classified as one category of executors. During the execution of the deceleration task, the allocation control layer L4 may allocate a corresponding category task parameter to each of the four hub motors and the four braking systems according to an execution parameter for execution of the deceleration task.

A service in the underlying control layer L5 of the vehicle control system 10 is configured to provide the category task parameter for at least one of the category executors. The underlying control layer L5 may send a command to the executor so that the executor executes a corresponding action, and may particularly send a previously determined category task parameter to one of specific hardware executors.

In some embodiments of this application, the reference layer L2 may include the following services: (1) A longitudinal trajectory tracking service configured to provide a target longitudinal trajectory parameter of the vehicle, the target longitudinal trajectory parameter being used for meeting a requirement for longitudinal motion of the vehicle. (2) A transverse trajectory tracking service configured to provide a target transverse trajectory parameter of the vehicle, the target transverse trajectory parameter being used for meeting a requirement for transverse motion of the vehicle. (3) A six-degree-of-freedom mode service configured to provide target parameters for mode setting of the vehicle, for example, including accelerations in three directions and angular velocities in the three directions. Compared with the longitudinal trajectory tracking service and the transverse trajectory tracking service, the six-degree-of-freedom mode service also takes requirement in the normal direction into consideration. (4) A gear control service configured to provide a target parameter for gear setting of the vehicle.

In some embodiments of this application, the advanced control layer L3 may include the following services: (1) A driver required torque service configured to determine a manual operation required torque. (2) A vehicle longitudinal acceleration control service configured to determine an acceleration required torque or an execution parameter requested for parking (for example, a braking system parameter and a gear selection parameter). (3) A yaw motion control service configured to determine a yaw motion required torque. (4) A slip rate control service configured to determine a slip rate required torque. (5) A normal control service configured to determine a normal torque. (6) A pitch control service configured to determine a pitch torque. (7) A roll control service configured to determine a roll control torque.

In some embodiments of this application, the allocation control layer L4 may include the following services: (1) A driving and braking coordination control service configured to allocate a torque control category task parameter to a driving category executor and a braking category task parameter to a braking category executor. (2) A low-speed parking service configured to allocate a parking braking category task parameter to a parking braking category executor and a gear control category task parameter to a gear control category executor. (3) A yaw motion control coordination service configured to allocate a braking category task parameter to a braking category executor, a steering category task parameter to a steering assistance category executor, and a suspension adjustment category task parameter to a suspension control category executor. (4) A driving and braking slip rate control coordination service configured to allocate a torque control category task parameter to a motor torque category executor and a braking category task parameter to a braking slip rate control category executor. (5) A six-degree-of-freedom coordination control service configured to allocate a torque control category task parameter to a driving category executor, a braking category task parameter to a braking category executor, a steering category task parameter to a steering assistance category executor, a vehicle body height adjustment category task parameter to a vehicle body height adjustment category executor, and a normal force control category task parameter to a suspension control category executor.

In some embodiments of this application, the underlying control layer L5 may include the following services: (1) A driver required torque allocation service configured to provide an actual torque control task parameter for at least one (for example, a front motor or a rear motor) of driving category executors. (2) A motor torque slip rate control service configured to provide an actual torque control task parameter for at least one of driving category executors. (3) A braking force allocation service configured to provide an actual braking task parameter for at least one (for example, a four-wheel braking system) of braking category executors. (4) A braking response slip rate control service configured to provide an actual braking task parameter for at least one of braking category executors. (5) An electronic steering assistance service configured to provide an actual steering task parameter (for example, a torque and an angle) for at least one (for example, an electric power steering system) of steering assistance category executors. (6) An air spring control service configured to provide an actual vehicle body height adjustment task parameter for at least one (for example, an air spring) of vehicle body height adjustment category executors. (7) A suspension control service configured to provide an actual normal force control task parameter for at least one of suspension control category executors.

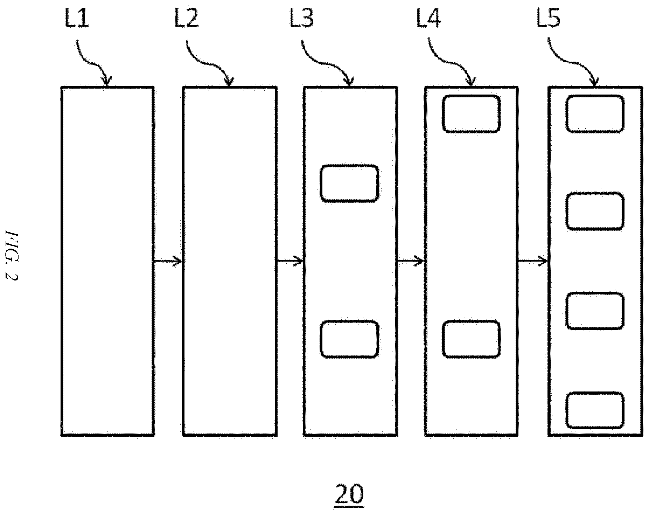

FIG. 2 shows an example of a longitudinal motion control task according to an example of the invention, in which each small block in each layer of a vehicle control system 20 denotes one service, and a combination of these services is used to complete the longitudinal motion control task. In order to complete the longitudinal motion control task, a constructed service combination takes into consideration: a vehicle longitudinal acceleration control service and a slip rate control service in the advanced control layer L3; a driving and braking coordination control service and a driving and braking slip rate control coordination service in the allocation control layer L4; and a driver required torque allocation service, a motor torque slip rate control service, a braking force allocation service, and a braking response slip rate control service in the underlying control layer L5. Services not shown in each layer are not taken into consideration. If no service in a layer is taken into consideration, this means that an operation instruction generated in the planning layer L1 is not specifically processed in the layer and is directly sent to the next layer.

In the example of FIG. 2, outputs (execution parameters) of the vehicle longitudinal acceleration control service and the slip rate control service in the advanced control layer L3 are used as an input of the driving and braking coordination control service in the allocation control layer L4; an output (a category task parameter) of the slip rate control service in the advanced control layer L3 is used as an input of the driving and braking slip rate control coordination service in the allocation control layer L4; and an output of the driving and braking coordination control service in the allocation control layer L4 is used as inputs of the driver required torque allocation service and the braking force allocation service in the underlying control layer L5, and an output of the driving and braking slip rate control coordination service in L4 is used as inputs of the braking force allocation service and the braking response slip rate control service in the underlying control layer L5. Through a service architecture constructed in this way, the longitudinal motion control task can be implemented.

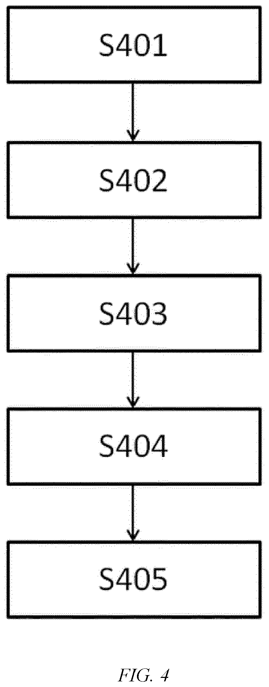

According to another aspect of this application, a vehicle control method is provided. As shown in FIG. 4, the vehicle control method includes the following steps. Step S401: Generate an operation instruction according to a driving task. The driving task may be a driver manipulating operable hardware as required, for example, turning a steering wheel, stepping on a brake pedal, stepping on an accelerator pedal, etc. The driving task may also be an execution process of an automatic execution mechanism according to an established procedure, for example, automatic parking, automatic vehicle following, etc. The execution process of the above driving task may be reflected as a specific operation instruction according to manipulation of the operable hardware or an execution process. For example, slamming on an accelerator may be a rapid accelerating driving task. In this case, an operation instruction may be accelerating, and an acceleration value may be associated with a throttle openness. For another example, in an automatic parking process, a vehicle speed may be specifically adjusted based on obstacles in front and behind. In this case, an operation instruction may also be accelerating.

The vehicle control method includes generating a target parameter according to the operation instruction in step S402, the target parameter reflecting a requirement for state control of a vehicle. The operation instruction generated in step S401 above is coarse and primitive. Sometimes, the operation instruction reflects only a requirement of a single driving task, but more often driving tasks are performed simultaneously. For example, the steering wheel may also be turned in a process of slamming on the accelerator pedal. In step S402, a plurality of driving tasks may be comprehensively considered to give a comprehensive value as the target parameter. Furthermore, in step S402, an operation instruction value may also be optimized to generate the target parameter. For example, the operation instruction indicates a uniformly accelerated motion with an acceleration of 5 m/s². However, for comfort of a driver and passengers and preventing the driver from stepping on the pedal accidentally, an acceleration reflected by the target parameter may have a certain hysteresis, and an acceleration curve may be smoother at an initial section. FIG. 3 shows an acceleration curve (indicated by a dotted line) reflecting an operation instruction, and an acceleration curve (indicated by a solid line) reflecting a target parameter. Compared with the acceleration curve of the operation instruction, the acceleration curve of the target parameter has a hysteresis, in which acceleration starts at a time t1, and an initial acceleration section is smooth. Finally, at a time t2, a speed required for a driving task is reached.

The vehicle control method includes generating an execution parameter according to the target parameter in step S403, the execution parameter reflecting an execution capability of a vehicle executor for the requirement for state control. The target parameter determined in step S402 reflects state requirements for the vehicle, but these requirements need to be met through execution of various resources (executors) of the vehicle. There is thus a need to convert these requirements into execution parameters of the resources of the vehicle. For example, when the target parameter is an acceleration X m/s², a corresponding execution parameter is torque Y N·m. Therefore, in step S403, the state requirement for the vehicle may be converted into the execution capability of the vehicle.

The vehicle control method includes allocating category task parameters to category executors according to the execution parameter in step S404. In the context of this application, a class of resources that may execute the same task is classified as executors of a category. For example, when a vehicle is provided with four hub motors, the four hub motors may execute a deceleration task. In addition, four-wheel braking systems may also execute the deceleration task. The four hub motors and the four braking systems may be classified as one category of executors. During the execution of the deceleration task, in step S404, a corresponding category task parameter may be allocated to each of the four hub motors and the four braking systems according to an execution parameter for execution of the deceleration task.

The vehicle control method includes providing the category task parameter for at least one of the category executors in step S405. In step S405, a command may be sent to the executor so that the executor executes a corresponding action, and particularly, a previously determined category task parameter may be sent to a specific hardware executor.

In some embodiments of this application, generating a target parameter according to the operation instruction in step S402 includes at least one of the following: (1) Providing a target longitudinal trajectory parameter of the vehicle, the target longitudinal trajectory parameter being used for meeting a requirement for longitudinal motion of the vehicle. (2) Providing a target transverse trajectory parameter of the vehicle, the target transverse trajectory parameter being used for meeting a requirement for transverse motion of the vehicle. (3) Providing target parameters for mode setting of the vehicle, for example, including accelerations in three directions and angular velocities in the three directions. Compared with the longitudinal trajectory tracking service and the transverse trajectory tracking service, the six-degree-of-freedom mode service also takes requirement in the normal direction into consideration. (4) Providing a target parameter for gear setting of the vehicle.

In some embodiments of this application, generating an execution parameter according to the target parameter in step S403 includes at least one of the following: (1) Determining a manual operation required torque. (2) Determining an acceleration required torque or an execution parameter requested for parking (for example, a braking system parameter and a gear selection parameter). (3) Determining a yaw motion required torque. (4) Determining a slip rate required torque. (5) Determining a normal torque, a pitch torque, and a roll control torque.

In some embodiments of this application, allocating category task parameters to category executors according to the execution parameter in step S404 includes at least one of the following: (1) allocating a torque control category task parameter to a driving category executor; (2) allocating a braking category task parameter to a braking category executor; (3) allocating a parking braking category task parameter to a parking braking category executor; (4) allocating a gear control category task parameter to a gear control category executor; (5) allocating a steering category task parameter to a steering assistance category executor; (6) allocating a suspension adjustment category task parameter to a suspension control category executor; (7) allocating a torque control category task parameter to a motor torque category executor; (8) allocating a braking category task parameter to a braking slip rate control category executor; (9) allocating a vehicle body height adjustment category task parameter to a vehicle body height adjustment category executor; and (10) allocating a normal force control category task parameter to a suspension control category executor.

In some embodiments of this application, providing the category task parameter for at least one of the category executors in step S405 includes at least one of the following: (1) Providing an actual torque control task parameter for at least one (for example, a front motor or a rear motor) of driving category executors. (2) Providing an actual braking task parameter for at least one (for example, a four-wheel braking system) of braking category executors. (3) Providing an actual steering task parameter (for example, a torque and an angle) for at least one (for example, an electric power steering system) of steering assistance category executors. (4) Providing an actual vehicle body height adjustment task parameter for at least one (for example, an air spring) of vehicle body height adjustment category executors. (5) Providing an actual normal force control task parameter for at least one of suspension control category executors.

According to still another aspect of this application, a computer-readable storage medium is provided, which has instructions stored therein, where the instructions, when executed by a processor, cause the processor to perform any one of the vehicle control methods described above. The computer-readable medium in this application includes various types of computer storage media, and may be any usable medium accessible to a general-purpose or special-purpose computer. For example, the computer-readable medium may include a RAM, a ROM, an EPROM, an EEPROM, a register, a hard disk, a removable hard disk, a CD-ROM or another optical memory, a magnetic disk memory or another magnetic storage device, or any other transitory or non-transitory media that can carry or store expected program code having an instruction or data structure form and be accessible to the general-purpose or special-purpose computer or a general-purpose or special-purpose processor. Data is usually copied magnetically in a disk used herein, while data is usually copied optically by using lasers in a disc. A combination thereof shall also fall within the scope of protection of the computer-readable media. For example, the storage medium is coupled to a processor, so that the processor can read information from and write information to the storage medium. In an alternative solution, the storage medium may be integrated into the processor. The processor and the storage medium may reside in an ASIC. The ASIC may reside in a user terminal. In an alternative solution, the processor and the storage medium may reside as discrete assemblies in a user terminal.

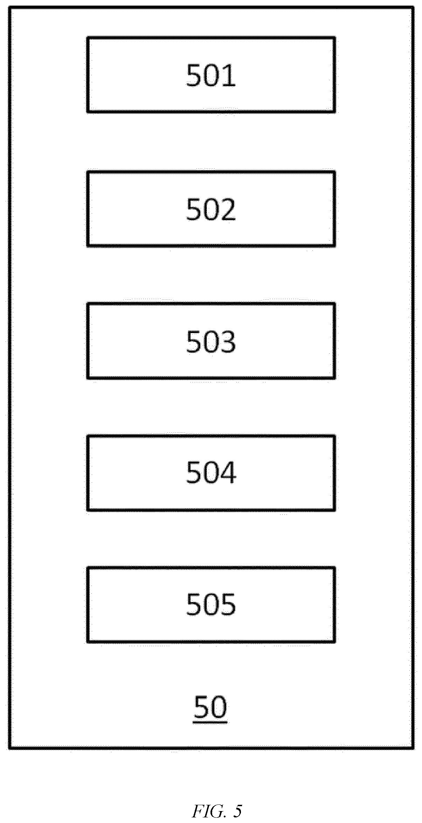

According to yet still another aspect of this application, a vehicle control system is provided. As shown in FIG. 5, a vehicle control system 50 includes an instruction generation unit 501, a target parameter generation unit 502, an execution parameter generation unit 503, a category parameter generation unit 504, and a parameter allocation unit 505.

The instruction generation unit 501 is configured to generate an operation instruction according to a driving task. The driving task may be a driver manipulating operable hardware as required, for example, turning a steering wheel, stepping on a brake pedal, stepping on an accelerator pedal, etc. The driving task may also be an execution process of an automatic execution mechanism according to an established procedure, for example, automatic parking, automatic vehicle following, etc. The execution process of the above driving task may be reflected as a specific operation instruction according to manipulation of the operable hardware or an execution process. For example, slamming on an accelerator may be a rapid accelerating driving task. In this case, an operation instruction may be accelerating, and an acceleration value may be associated with a throttle openness. For another example, in an automatic parking process, a vehicle speed may be specifically adjusted based on obstacles in front and behind. In this case, an operation instruction may also be accelerating.

The target parameter generation unit 502 is configured to generate a target parameter according to the operation instruction, the target parameter reflecting a requirement for state control of a vehicle. The operation instruction generated by the instruction generation unit 501 described above is coarse and primitive. Sometimes, the operation instruction reflects only a requirement of a single driving task, but more often driving tasks are performed simultaneously. For example, the steering wheel may also be turned in a process of slamming on the accelerator pedal. The target parameter generation unit 502 may comprehensively consider a plurality of driving tasks to give a comprehensive value as the target parameter. Furthermore, the target parameter generation unit 502 may also optimize an operation instruction value to generate the target parameter. For example, the operation instruction indicates a uniformly accelerated motion with an acceleration of 5 m/s². However, for comfort of a driver and passengers and preventing the driver from stepping on the pedal accidentally, an acceleration reflected by the target parameter may have a certain hysteresis, and an acceleration curve may be smoother at an initial section. FIG. 3 shows an acceleration curve (indicated by a dotted line) reflecting an operation instruction, and an acceleration curve (indicated by a solid line) reflecting a target parameter. Compared with the acceleration curve of the operation instruction, the acceleration curve of the target parameter has a hysteresis, in which acceleration starts at a time t1, and an initial acceleration section is smooth. Finally, at a time t2, a speed required for a driving task is reached.

The execution parameter generation unit 503 is configured to generate an execution parameter according to the target parameter, the execution parameter reflecting an execution capability of a vehicle executor for the requirement for state control. The target parameter determined by the target parameter generation unit 502 reflects state requirements for the vehicle, but these requirements need to be met through execution of various resources (executors) of the vehicle. There is thus a need to convert these requirements into execution parameters of the resources of the vehicle. For example, when the target parameter is an acceleration X m/s², a corresponding execution parameter is torque Y N·m. Therefore, the target parameter generation unit 502 may convert the state requirement for the vehicle into the execution capability of the vehicle.

The category parameter generation unit 504 is configured to allocate category task parameters to category executors according to the execution parameter. In the context of this application, a class of resources that may execute the same task is classified as executors of a category. For example, when a vehicle is provided with four hub motors, the four hub motors may execute a deceleration task. In addition, four-wheel braking systems may also execute the deceleration task. The four hub motors and the four braking systems may be classified as one category of executors. During the execution of the deceleration task, the category parameter generation unit 504 may allocate a corresponding category task parameter to each of the four hub motors and the four braking systems according to an execution parameter for execution of the deceleration task.

The parameter allocation unit 505 is configured to provide the category task parameter for at least one of the category executors. The parameter allocation unit 505 may send a command to the executor so that the executor executes a corresponding action, and may particularly send a previously determined category task parameter to a specific hardware executor.

In some embodiments of this application, the target parameter generation unit 502 may particularly perform at least one of the following: (1) Providing a target longitudinal trajectory parameter of the vehicle, the target longitudinal trajectory parameter being used for meeting a requirement for longitudinal motion of the vehicle. (2) Providing a target transverse trajectory parameter of the vehicle, the target transverse trajectory parameter being used for meeting a requirement for transverse motion of the vehicle. (3) Providing target parameters for mode setting of the vehicle, for example, including accelerations in three directions and angular velocities in the three directions. Compared with the longitudinal trajectory tracking service and the transverse trajectory tracking service, the six-degree-of-freedom mode service also takes requirement in the normal direction into consideration. (4) Providing a target parameter for gear setting of the vehicle.

In some embodiments of this application, the execution parameter generation unit 503 may particularly perform at least one of the following: (1) Determining a manual operation required torque. (2) Determining an acceleration required torque or an execution parameter requested for parking (for example, a braking system parameter and a gear selection parameter). (3) Determining a yaw motion required torque. (4) Determining a slip rate required torque. (5) Determining a normal torque, a pitch torque, and a roll control torque.

In some embodiments of this application, the category parameter generation unit 504 may particularly perform at least one of the following: (1) allocating a torque control category task parameter to a driving category executor; (2) allocating a braking category task parameter to a braking category executor; (3) allocating a parking braking category task parameter to a parking braking category executor; (4) allocating a gear control category task parameter to a gear control category executor; (5) allocating a steering category task parameter to a steering assistance category executor; (6) allocating a suspension adjustment category task parameter to a suspension control category executor; (7) allocating a torque control category task parameter to a motor torque category executor; (8) allocating a braking category task parameter to a braking slip rate control category executor; (9) allocating a vehicle body height adjustment category task parameter to a vehicle body height adjustment category executor; and (10) allocating a normal force control category task parameter to a suspension control category executor.

In some embodiments of this application, the parameter allocation unit 505 may particularly perform at least one of the following: (1) Providing an actual torque control task parameter for at least one (for example, a front motor or a rear motor) of driving category executors. (2) Providing an actual braking task parameter for at least one (for example, a four-wheel braking system) of braking category executors. (3) Providing an actual steering task parameter (for example, a torque and an angle) for at least one (for example, an electric power steering system) of steering assistance category executors. (4) Providing an actual vehicle body height adjustment task parameter for at least one (for example, an air spring) of vehicle body height adjustment category executors. (5) Providing an actual normal force control task parameter for at least one of suspension control category executors.

The above description is merely illustrative of specific embodiments of this application, but the scope of protection of this application is not limited thereto. In the case of no conflict, the embodiments of this application and features in the embodiments may also be combined with each another. The scope of protection of this application shall be subject to recitations of the claims.

## Claims

1. A vehicle control system (10) comprising:
a planning layer (L1) in which a service is configured to generate a coarse and primitive operation instruction according to a driving task;
a reference layer (L2) in which a service is configured to generate a target parameter according to the operation instruction, the target parameter reflecting a requirement for state control of a vehicle;
an advanced control layer (L3) in which a service is configured to generate an execution parameter according to the target parameter, the execution parameter reflecting an execution capability of a vehicle executor for the requirement for state control;
an allocation control layer (L4) in which a service is configured to allocate category task parameters to category executors according to the execution parameter; and
an underlying control layer (L5) in which a service is configured to provide the category task parameter for at least one of the category executors.

2. The system according to claim 1, wherein the reference layer (L2) comprises at least one of the following:
a longitudinal trajectory tracking service configured to provide a target longitudinal trajectory parameter of the vehicle;
a transverse trajectory tracking service configured to provide a target transverse trajectory parameter of the vehicle;
a six-degree-of-freedom mode service configured to provide target parameters for mode setting of the vehicle, including accelerations in three directions and angular velocities in the three directions; and
a gear control service configured to provide a target parameter for gear setting of the vehicle.

3. The system according to claim 1 or 2, wherein the advanced control layer (L3) comprises at least one of the following:
a driver required torque service configured to determine a manual operation required torque;
a vehicle longitudinal acceleration control service configured to determine an acceleration required torque or an execution parameter requested for parking;
a yaw motion control service configured to determine a yaw motion required torque;
a slip rate control service configured to determine a slip rate required torque;
a normal control service configured to determine a normal torque;
a pitch control service configured to determine a pitch torque; and
a roll control service configured to determine a roll control torque.

4. The system according to any of claims 1 to 3, wherein the allocation control layer (L4) comprises at least one of the following:
a driving and braking coordination control service configured to allocate a torque control category task parameter to a driving category executor and a braking category task parameter to a braking category executor;
a low-speed parking service configured to allocate a parking braking category task parameter to a parking braking category executor and a gear control category task parameter to a gear control category executor;
a yaw motion control coordination service configured to allocate a braking category task parameter to a braking category executor, a steering category task parameter to a steering assistance category executor, and a suspension adjustment category task parameter to a suspension control category executor;
a driving and braking slip rate control coordination service configured to allocate a torque control category task parameter to a motor torque category executor and a braking category task parameter to a braking slip rate control category executor; and
a six-degree-of-freedom coordination control service configured to allocate a torque control category task parameter to a driving category executor, a braking category task parameter to a braking category executor, a steering category task parameter to a steering assistance category executor, a vehicle body height adjustment category task parameter to a vehicle body height adjustment category executor, and a normal force control category task parameter to a suspension control category executor.

5. The system according to any of claims 1 to 4, wherein the underlying control layer (L5) comprises at least one of the following:
a driver required torque allocation service configured to provide an actual torque control task parameter for at least one of driving category executors;
a motor torque slip rate control service configured to provide an actual torque control task parameter for at least one of driving category executors;
a braking force allocation service configured to provide an actual braking task parameter for at least one of braking category executors;
a braking response slip rate control service configured to provide an actual braking task parameter for at least one of braking category executors;
an electronic steering assistance service configured to provide an actual steering task parameter for at least one of steering assistance category executors;
an air spring control service configured to provide an actual vehicle body height adjustment task parameter for at least one of vehicle body height adjustment category executors; and
a suspension control service configured to provide an actual normal force control task parameter for at least one of suspension control category executors.

6. A vehicle control method comprising:
generating a coarse and primitive operation instruction according to a driving task (S401);
generating a target parameter according to the operation instruction, the target parameter reflecting a requirement for state control of a vehicle (402);
generating an execution parameter according to the target parameter (S403), the execution parameter reflecting an execution capability of a vehicle executor for the requirement for state control;
allocating category task parameters to category executors according to the execution parameter (S404); and
providing the category task parameter for at least one of the category executors (S405).

7. The method according to claim 6, wherein generating a target parameter according to the operation instruction (S402) comprises at least one of the following:
providing a target longitudinal trajectory parameter of the vehicle;
providing a target transverse trajectory parameter of the vehicle;
providing target parameters for mode setting of the vehicle, including accelerations in three directions and angular velocities in the three directions; and
providing a target parameter for gear setting of the vehicle.

8. The method according to claim 6 or 7, wherein generating an execution parameter according to the target parameter (S403) comprises at least one of the following:
determining a manual operation required torque;
determining an acceleration required torque or an execution parameter requested for parking;
determining a yaw motion required torque;
determining a slip rate required torque; and
determining a normal torque, a pitch torque, and a roll control torque.

9. The method according to any of claims 6 to 8, wherein allocating category task parameters to category executors according to the execution parameter (S404) comprises at least one of the following:
allocating a torque control category task parameter to a driving category executor;
allocating a braking category task parameter to a braking category executor;
allocating a parking braking category task parameter to a parking braking category executor;
allocating a gear control category task parameter to a gear control category executor;
allocating a steering category task parameter to a steering assistance category executor;
allocating a suspension adjustment category task parameter to a suspension control category executor;
allocating a torque control category task parameter to a motor torque category executor;
allocating a braking category task parameter to a braking slip rate control category executor;
allocating a vehicle body height adjustment category task parameter to a vehicle body height adjustment category executor; and
allocating a normal force control category task parameter to a suspension control category executor.

10. The method according to any of claims 6 to 9, wherein providing the category task parameter for at least one of the category executors (S405) comprises at least one of the following:
providing an actual torque control task parameter for at least one of driving category executors;
providing an actual braking task parameter for at least one of braking category executors;
providing an actual steering task parameter for at least one of steering assistance category executors;
providing an actual vehicle body height adjustment task parameter for at least one of vehicle body height adjustment category executors; and
providing an actual normal force control task parameter for at least one of suspension control category executors.

11. A computer-readable storage medium having instructions stored therein, **characterized in that**, wherein the instructions, when executed by a processor, cause the processor to perform the method of any of claims 6 to 10.

## Patentansprüche

1. Fahrzeugsteuerungssystem (10), aufweisend:
eine Planungsschicht (L1), in der ein Dienst dafür ausgelegt ist, eine grobe und primitive Betriebsanweisung gemäß einer Fahraufgabe zu erzeugen;
eine Referenzschicht (L2), in der ein Dienst dafür ausgelegt ist, einen Zielparameter gemäß der Betriebsanweisung zu erzeugen, wobei der Zielparameter eine Anforderung für die Zustandssteuerung eines Fahrzeugs widerspiegelt;
eine erweiterte Steuerungsschicht (L3), in der ein Dienst dafür ausgelegt ist, einen Ausführungsparameter gemäß dem Zielparameter zu erzeugen, wobei der Ausführungsparameter eine Ausführungsfähigkeit eines Fahrzeugausführers für die Anforderung der Zustandssteuerung widerspiegelt;
eine Zuweisungssteuerungsschicht (L4), in der ein Dienst dafür ausgelegt ist, Kategorieaufgabenparameter gemäß dem Ausführungsparameter an Kategorieausführer zuzuweisen; und
eine zugrundeliegende Steuerungsschicht (L5), in der ein Dienst dafür ausgelegt ist, den Kategorieaufgabenparameter für mindestens einen der Kategorieausführer bereitzustellen.

2. System nach Anspruch 1, wobei die Referenzschicht (L2) mindestens eines der folgenden Elemente aufweist:
einen Längstrajektorienverfolgungsdienst, der dafür ausgelegt ist, einen Längstrajektorienzielparameter des Fahrzeugs bereitzustellen;
einen Quertrajektorienverfolgungsdienst, der dafür ausgelegt ist, einen Quertrajektorienzielparameter des Fahrzeugs bereitzustellen;
einen Dienst für einen Modus mit sechs Freiheitsgraden, der dafür ausgelegt ist, Zielparameter zur Moduseinstellung des Fahrzeugs bereitzustellen, einschließlich Beschleunigungen in drei Richtungen und Winkelgeschwindigkeiten in den drei Richtungen; und
einen Getriebesteuerungsdienst, der dafür ausgelegt ist, einen Zielparameter zur Gangeinstellung des Fahrzeugs bereitzustellen.

3. System nach Anspruch 1 oder 2, wobei die erweiterte Steuerungsschicht (L3) mindestens eines der folgenden Elemente aufweist:
einen Dienst für ein vom Fahrer angefordertes Drehmoment, der dafür ausgelegt ist, ein angefordertes Drehmoment beim manuellen Betrieb zu bestimmen;
einen Fahrzeuglängsbeschleunigungssteuerungsdienst, der dafür ausgelegt ist, ein zur Beschleunigung erforderliches Drehmoment oder einen zum Einparken erforderlichen Ausführungsparameter zu bestimmen;
einen Gierbewegungssteuerungsdienst, der dafür ausgelegt ist, ein zur Gierbewegung erforderliches Drehmoment zu bestimmen;
einen Schlupfratensteuerungsdienst, der dafür ausgelegt ist, ein für die Schlupfrate erforderliches Drehmoment zu bestimmen;
einen Normalsteuerungsdienst, der dafür ausgelegt ist, ein Normaldrehmoment zu bestimmen;
einen Nicksteuerungsdienst, der dafür ausgelegt ist, ein Nickdrehmoment zu bestimmen; und
einen Wanksteuerungsdienst, der dafür ausgelegt ist, ein Wanksteuerungsdrehmoment zu bestimmen.

4. System nach einem der Ansprüche 1 bis 3, wobei die Zuweisungssteuerungsschicht (L4) mindestens eines der folgenden Elemente aufweist:
einen Fahr- und Bremskoordinationssteuerungsdienst, der dafür ausgelegt ist, einem Fahrkategorieausführer einen Drehmomentsteuerungskategorieaufgabenparameter und einem Bremskategorieausführer einen Bremskategorieaufgabenparameter zuzuweisen;
einen Niedriggeschwindigkeitsparkdienst, der dafür ausgelegt ist, einem Parkbremskategorieausführer einen Parkbremskategorieaufgabenparameter und einem Getriebesteuerungskategorieausführer einen Getriebesteuerungskategorieaufgabenparameter zuzuweisen;
einen Gierbewegungskoordinationsdienst, der dafür ausgelegt ist, einem Bremskategorieausführer einen Bremskategorieaufgabenparameter, einem Lenkunterstützungskategorieausführer einen Lenkkategorieaufgabenparameter und einem Aufhängungssteuerungskategorieausführer einen Aufhängungseinstellungskategorieaufgabenparameter zuzuweisen;
einen Fahr- und Bremsschlupfratensteuerungskoordinationsdienst, der dafür ausgelegt ist, einem Motordrehmomentkategorieausführer einen Drehmomentsteuerungskategorieaufgabenparameter und einem Bremsschlupfratensteuerungskategorieausführer einen Bremskategorieaufgabenparameter zuzuweisen; und
einen Steuerungsdienst zur Koordination von sechs Freiheitsgraden, der dafür ausgelegt ist, einem Fahrkategorieausführer einen Drehmomentsteuerungskategorieaufgabenparameter, einem Bremskategorieausführer einen Bremskategorieaufgabenparameter, einem Lenkunterstützungskategorieausführer einen Lenkkategorieaufgabenparameter, einem Fahrzeugkarosseriehöheneinstellungskategorieausführer einen Fahrzeugkarosseriehöheneinstellungskategorieaufgabenpar ameter und einem Aufhängungssteuerungskategorieausführer einen Normalkraftsteuerungskategorieaufgabenparameter zuzuweisen.

5. System nach einem der Ansprüche 1 bis 4, wobei die zugrundeliegende Steuerungsschicht (L5) mindestens eines der folgenden Elemente aufweist:
einen Dienst zur Zuweisung des vom Fahrer angeforderten Drehmoments, der dafür ausgelegt ist, einen tatsächlichen Drehmomentsteuerungsaufgabenparameter für mindestens einen der Fahrkategorieausführer bereitzustellen;
einen Motordrehmomentschlupfsteuerungsdienst, der dafür ausgelegt ist, einen tatsächlichen Drehmomentsteuerungsaufgabenparameter für mindestens einen der Fahrkategorieausführer bereitzustellen;
einen Bremskraftzuweisungsdienst, der dafür ausgelegt ist, einen tatsächlichen Bremsaufgabenparameter für mindestens einen der Bremskategorieausführer bereitzustellen;
einen Bremsreaktionsschlupfratensteuerungsdienst, der dafür ausgelegt ist, einen tatsächlichen Bremsaufgabenparameter für mindestens einen der Bremskategorieausführer bereitzustellen;
einen Dienst für die elektronische Lenkunterstützung, der dafür ausgelegt ist, einen tatsächlichen Lenkaufgabenparameter für mindestens einen der Lenkunterstützungskategorieausführer bereitzustellen;
einen Luftfedersteuerungsdienst, der dafür ausgelegt ist, einen tatsächlichen Fahrzeugkarosseriehöheneinstellungsaufgabenparameter für mindestens einen der Fahrzeugkarosseriehöheneinstellungskategorieausführer bereitzustellen; und
einen Aufhängungssteuerungsdienst, der dafür ausgelegt ist, einen tatsächlichen Normalkraftsteuerungsaufgabenparameter für mindestens einen der Aufhängungssteuerungskategorieausführer bereitzustellen.

6. Fahrzeugsteuerungsverfahren, aufweisend:
Erzeugen einer groben und primitiven Betriebsanweisung gemäß einer Fahraufgabe (S401);
Erzeugen eines Zielparameters gemäß der Betriebsanweisung, wobei der Zielparameter eine Anforderung für die Zustandssteuerung eines Fahrzeugs widerspiegelt (402);
Erzeugen eines Ausführungsparameters gemäß dem Zielparameter (S403), wobei der Ausführungsparameter eine Ausführungsfähigkeit eines Fahrzeugausführers für die Anforderung der Zustandssteuerung widerspiegelt;
Zuweisen von Kategorieaufgabenparametern gemäß dem Ausführungsparameter an den Kategorieausführer (S404); und
Bereitstellen des Kategorieaufgabenparameters für mindestens einen der Kategorieausführer (S405).

7. Verfahren nach Anspruch 6, wobei das Erzeugen eines Zielparameters gemäß der Betriebsanweisung (S402) mindestens einen der folgenden Vorgänge aufweist:
Bereitstellen eines Längstrajektorienzielparameters des Fahrzeugs;
Bereitstellen eines Quertrajektorienzielparameters des Fahrzeugs;
Bereitstellen von Zielparametern zur Moduseinstellung des Fahrzeugs, einschließlich Beschleunigungen in drei Richtungen und Winkelgeschwindigkeiten in den drei Richtungen; und
Bereitstellen eines Zielparameters für die Gangeinstellung des Fahrzeugs.

8. Verfahren nach Anspruch 6 oder 7, wobei das Erzeugen eines Ausführungsparameters gemäß dem Zielparameter (S403) mindestens einen der folgenden Vorgänge aufweist:
Bestimmen eines angeforderten Drehmoments beim manuellen Betrieb;
Bestimmen eines zur Beschleunigung erforderlichen Drehmoments oder eines zum Einparken erforderlichen Ausführungsparameters;
Bestimmen eines für die Gierbewegung erforderlichen Drehmoments;
Bestimmen eines für die Schlupfrate erforderlichen Drehmoments; und
Bestimmen eines Normaldrehmoments, eines Nickdrehmoments und eines Wanksteuerungsdrehmoments.

9. Verfahren nach einem der Ansprüche 6 bis 8, wobei das Zuweisen von Kategorieaufgabenparametern an Kategorieausführer gemäß dem Ausführungsparameter (S404) mindestens einen der folgenden Vorgänge aufweist:
Zuweisen eines Drehmomentsteuerungskategorieaufgabenparameters an einen Fahrkategorieausführer;
Zuweisen eines Bremskategorieaufgabenparameters an einen Bremskategorieausführer;
Zuweisen eines Parkbremskategorieaufgabenparameters an einen Parkbremskategorieausführer;
Zuweisen eines Getriebesteuerungskategorieaufgabenparameters an einen Getriebesteuerungskategorieausführer;
Zuweisen eines Lenkkategorieaufgabenparameters an einen Lenkunterstützungskategorieausführer;
Zuweisen eines Aufhängungseinstellungskategorieaufgabenparameters an einen Aufhängungssteuerungskategorieausführer;
Zuweisen eines Drehmomentsteuerungskategorieaufgabenparameters an einen Motordrehmomentkategorieausführer;
Zuweisen eines Bremskategorieaufgabenparameters an einen Bremsschlupfratensteuerungskategorieausführer;
Zuweisen eines Fahrzeugkarosseriehöheneinstellungskategorieaufgabenpar ameters an einen Fahrzeugkarosseriehöheneinstellungskategorieausführer; und
Zuweisen eines Normalkraftsteuerungskategorieaufgabenparameters an einen Aufhängungssteuerungskategorieausführer.

10. Verfahren nach einem der Ansprüche 6 bis 9, wobei das Bereitstellen des Kategorieaufgabenparameters für mindestens einen der Kategorieausführer (S405) mindestens einen der folgenden Vorgänge aufweist:
Bereitstellen eines tatsächlichen Drehmomentsteuerungsaufgabenparameters für mindestens einen der Fahrkategorieausführer;
Bereitstellen eines tatsächlichen Bremsaufgabenparameters für mindestens einen der Bremskategorieausführer;
Bereitstellen eines tatsächlichen Lenkaufgabenparameters für mindestens einen der Lenkunterstützungskategorieausführer;
Bereitstellen eines tatsächlichen Fahrzeugkarosseriehöheneinstellungsaufgabenparameters für mindestens einen der Fahrzeugkarosseriehöheneinstellungskategorieausführer; und
Bereitstellen eines tatsächlichen Normalkraftsteuerungsaufgabenparameters für mindestens einen der Aufhängungssteuerungskategorieausführer.

11. Computerlesbares Speichermedium mit darin gespeicherten Anweisungen, **dadurch gekennzeichnet, dass** die Anweisungen bei ihrer Ausführung durch einen Prozessor den Prozessor veranlassen, das Verfahren nach einem der Ansprüche 6 bis 10 durchzuführen.

## Revendications

1. Système de contrôle de véhicule (10), comprenant :
une couche de planification (L1) dans laquelle un service est configuré de façon à générer une instruction de fonctionnement grossière et primitive selon une tâche de conduite ;
une couche de référence (L2) dans laquelle un service est configuré de façon à générer un paramètre cible selon l'instruction de fonctionnement, ce paramètre cible reflétant une exigence pour le contrôle de l'état d'un véhicule ;
une couche de contrôle avancé (L3) dans laquelle un service est configuré de façon à générer un paramètre d'exécution selon le paramètre cible, ce paramètre d'exécution reflétant une capacité d'exécution d'un exécuteur du véhicule pour l'exigence de contrôle de l'état ;
une couche de contrôle d'attribution (L4) dans laquelle un service est configuré de façon à attribuer des paramètres de tâche de catégorie à des exécuteurs de catégorie selon le paramètre d'exécution ; et
une couche de contrôle sous-jacente (L5) dans laquelle un service est configuré de façon à fournir le paramètre de tâche de catégorie pour au moins un des exécuteurs de catégorie.

2. Système selon la revendication 1, dans lequel la couche de référence (L2) comprend au moins un des services suivants :
un service de suivi de trajectoire longitudinale configuré de façon à fournir un paramètre cible de trajectoire longitudinale du véhicule ;
un service de suivi de trajectoire transversale configuré de façon à fournir un paramètre cible de trajectoire transversale du véhicule ;
un service de mode de six degrés de liberté configuré de façon à fournir des paramètres cibles pour le réglage du mode du véhicule, y compris des accélérations dans trois directions et des vitesses angulaires dans les trois directions ; et
un service de contrôle de transmission configuré de façon à fournir un paramètre cible pour le réglage de la transmission du véhicule.

3. Système selon la revendication 1 ou 2, dans lequel la couche de contrôle avancé (L3) comprend au moins un des services suivants :
un service de couple requis par le conducteur configuré de façon à déterminer un couple requis pour un fonctionnement manuel ;
un service de contrôle d'accélération longitudinale du véhicule configuré de façon à déterminer un couple requis pour l'accélération ou un paramètre d'exécution demandé pour le stationnement ;
un service de contrôle de mouvement de lacet configuré de façon à déterminer le couple requis pour le mouvement de lacet ;
un service de contrôle de taux de glissement configuré de façon à déterminer un couple requis pour le taux de glissement ;
un service de contrôle normal configuré de façon à déterminer un couple normal ;
un service de contrôle de tangage configuré de façon à déterminer un couple de tangage ; et
un service de contrôle de roulis configuré de façon à déterminer un couple de contrôle du roulis.

4. Système selon l'une quelconque des revendications 1 à 3, dans lequel la couche de contrôle d'attribution (L4) comprend au moins un des services suivants :
un service de contrôle de coordination de la conduite et du freinage configuré de façon à attribuer un paramètre de tâche de catégorie de contrôle du couple à un exécuteur de catégorie de conduite et un paramètre de tâche de catégorie de freinage à un exécuteur de catégorie de freinage ;
un service de stationnement à petite vitesse configuré de façon à attribuer un paramètre de tâche de catégorie de freinage de stationnement à un exécuteur de catégorie de freinage de stationnement et un paramètre de tâche de catégorie de contrôle de la transmission à un exécuteur de catégorie de contrôle de la transmission ;
un service de coordination de contrôle de mouvement de lacet configuré de façon à attribuer un paramètre de tâche de catégorie de freinage à un exécuteur de catégorie de freinage, un paramètre de tâche de catégorie de direction à un exécuteur de catégorie d'assistance de la direction, et un paramètre de tâche de catégorie de réglage de suspension à un exécuteur de catégorie de contrôle de la suspension ;
un service de coordination de contrôle de taux de glissement de conduite et de freinage configuré de façon à attribuer un paramètre de tâche de catégorie de contrôle du couple à un exécuteur de catégorie de couple du moteur et un paramètre de tâche de catégorie de freinage à un exécuteur de catégorie de contrôle du taux de glissement de freinage ; et
un service de contrôle de coordination de six degrés de liberté configuré de façon à attribuer un paramètre de tâche de catégorie de contrôle du couple à un exécuteur de catégorie de conduite, un paramètre de tâche de catégorie de freinage à un exécuteur de catégorie de freinage, un paramètre de tâche de catégorie de direction à un exécuteur de catégorie d'assistance de la direction, un paramètre de tâche de catégorie de réglage de hauteur de carrosserie du véhicule à un exécuteur de catégorie de réglage de la hauteur de la carrosserie du véhicule, et un paramètre de tâche de catégorie de contrôle de force normale à un exécuteur de catégorie de contrôle de la suspension.

5. Système selon l'une quelconque des revendications 1 à 4, dans lequel la couche de contrôle sous-jacente (L5) comprend au moins un des services suivants :
un service d'attribution de couple requis par le conducteur configuré de façon à fournir un paramètre de tâche de contrôle du couple réel pour au moins un des exécuteurs de catégorie de conduite ;
un service de contrôle de taux de glissement de couple du moteur configuré de façon à fournir un paramètre de tâche de contrôle du couple réel pour au moins un des exécuteurs de catégorie de conduite ;
un service d'attribution de force de freinage configuré de façon à fournir un paramètre de tâche de freinage réel pour au moins un des exécuteurs de catégorie de freinage ;
un service de contrôle de taux de glissement de réponse de freinage configuré de façon à fournir un paramètre de tâche de freinage réel pour au moins un des exécuteurs de catégorie de freinage ;
un service d'assistance de direction électronique configuré de façon à fournir un paramètre de tâche de freinage réel pour au moins un des exécuteurs de catégorie d'assistance du freinage ;
un service de contrôle de ressort pneumatique configuré de façon à fournir un paramètre de tâche de réglage de hauteur réelle de la carrosserie du véhicule pour au moins un des exécuteurs de catégorie de réglage de la hauteur de la carrosserie du véhicule ; et
un service de contrôle de suspension configuré de façon à fournir un paramètre de tâche de contrôle de la force normale réelle pour au moins un des exécuteurs de catégorie de contrôle de la suspension.

6. Procédé de contrôle de véhicule, comprenant :
la génération d'une instruction de fonctionnement grossière et primitive selon une tâche de conduite (S401) ;
la génération d'un paramètre cible selon l'instruction de fonctionnement, ce paramètre cible reflétant une exigence pour le contrôle de l'état d'un véhicule (402) ;
la génération d'un paramètre d'exécution selon le paramètre cible (S403), ce paramètre d'exécution reflétant une capacité d'exécution d'un exécuteur du véhicule pour l'exigence pour le contrôle de l'état ;
l'attribution de paramètres de tâches de catégorie à des exécuteurs de catégorie selon le paramètre d'exécution (S404) ; et
la fourniture du paramètre de tâche de catégorie pour au moins un des exécuteurs de catégorie (S405).

7. Procédé selon la revendication 6, dans lequel la génération d'un paramètre cible selon l'instruction de fonctionnement (S402) comprend au moins une des actions suivantes :
la fourniture d'un paramètre cible de trajectoire longitudinale du véhicule ;
la fourniture d'un paramètre cible de trajectoire transversale du véhicule ;
la fourniture de paramètres cibles pour le réglage du mode du véhicule, y compris des accélérations dans trois directions et des vitesses angulaires dans les trois directions ; et
la fourniture d'un paramètre cible pour le réglage de la transmission du véhicule.

8. Procédé selon la revendication 6 ou 7, dans lequel la génération d'un paramètre d'exécution selon le paramètre cible (S403) comprend au moins une des actions suivantes :
la détermination d'un couple requis pour un fonctionnement manuel ;
la détermination d'un couple requis pour l'accélération ou d'un paramètre d'exécution demandé pour le stationnement ;
la détermination d'un couple requis pour le mouvement de lacet ;
la détermination d'un couple requis pour le taux de glissement ; et
la détermination d'un couple normal, d'un couple de tangage et d'un couple de contrôle du roulis.

9. Procédé selon l'une quelconque des revendications 6 à 8, dans lequel l'attribution de paramètres de tâches de catégorie à des exécuteurs de catégorie selon le paramètre d'exécution (S404) comprend au moins une des actions suivantes :
l'attribution d'un paramètre de tâche de catégorie de contrôle du couple à un exécuteur de catégorie de conduite ;
l'attribution d'un paramètre de tâche de catégorie de freinage à un exécuteur de catégorie de freinage ;
l'attribution d'un paramètre de tâche de catégorie de freinage de stationnement à un exécuteur de catégorie de freinage de stationnement ;
l'attribution d'un paramètre de tâche de catégorie de contrôle de la transmission à un exécuteur de catégorie de contrôle de la transmission ;
l'attribution d'un paramètre de tâche de catégorie de direction à un exécuteur de catégorie d'assistance de direction ;
l'attribution d'un paramètre de tâche de catégorie de réglage de la suspension à un exécuteur de catégorie de contrôle de la suspension ;
l'attribution d'un paramètre de tâche de catégorie de contrôle du couple à un exécuteur de catégorie de couple du moteur ;
l'attribution d'un paramètre de tâche de catégorie de freinage à un exécuteur de catégorie de contrôle du taux de glissement de freinage ;
l'attribution d'un paramètre de tâche de catégorie de réglage de la hauteur de la carrosserie du véhicule à un exécuteur de catégorie de réglage de la hauteur de la carrosserie du véhicule ; et
l'attribution d'un paramètre de tâche de catégorie de contrôle de la force normale à un exécuteur de catégorie de contrôle de la suspension.

10. Procédé selon l'une quelconque des revendications 6 à 9, dans lequel la fourniture du paramètre de tâche de catégorie pour au moins un des exécuteurs de catégorie (S405) comprend au moins une des actions suivantes :
la fourniture d'un paramètre de tâche de contrôle du couple réel pour au moins un des exécuteurs de catégorie de conduite ;
la fourniture d'un paramètre de tâche de freinage réel pour au moins un des exécuteurs de catégorie de freinage ;
la fourniture d'un paramètre de tâche de direction réelle pour au moins un des exécuteurs de catégorie d'assistance de direction ;
la fourniture d'un paramètre de tâche de réglage de la hauteur réelle de la carrosserie du véhicule pour au moins un des exécuteurs de catégorie de réglage de la hauteur de la carrosserie du véhicule ; et
la fourniture d'un paramètre de tâche de contrôle de la force normale réelle pour au moins un des exécuteurs de catégorie de contrôle de la suspension.

11. Support de stockage lisible par ordinateur ayant des instructions stockées sur lui, **caractérisé en ce que**, lorsque ces instructions sont exécutées par un processeur, elles font exécuter à ce processeur le procédé selon l'une quelconque des revendications 6 à 10.
